# EUROPEAN PATENT APPLICATION

(11) **EP 0 950 991 A2**
(43) Date of publication of application: **20.10.1999**
(21) Application number: 99104215.1
(22) Date of filing: 02.03.1999
(51) Int. Cl.: G07F 7/00, G07F 15/00, G07F 7/08

(54) **Payment system**

(30) Priority: 15.04.1998 GB 9808014
(71) Applicant: Siemens Metering Limited, Oldbury, Bracknell, Berkshire, RG12 8FZ (GB)
(72) Inventor: Wilczynski, Piotr Pawel, Brookside, Telford, Shropshire TF3 1NH (GB); Ricci, Francesco Giovanni, Shropshire SY4 4LR (GB)
(74) Representative: Allen, Derek

(57) **Abstract**

A payment system has a delivering apparatus (2) which is selectively operable to deliver a service (8) to a consumer and payment means (1) for controlling supply of the service (8) by the delivering apparatus (2). The payment means (1) comprises a portable data storage device, which includes a first storage area (3) which represents a monetary value and which is assigned to the customer. The portable data storage device also includes a second storage area (4) which represents a further monetary value and which is assigned to a service provider. The portable data storage device further includes a script module (5) containing information relating the access procedures and the use of the storage areas (3, 4). The payment system is enabled to deal with different payment schemas. The script module (5) may further contain information and/or commands to provide additional functionality to the delivering apparatus (2) or to the payment means (1).

## Description

### Field of the invention

The present invention relates generally to payment systems for delivered services, such as gas, electricity, water, pay television etc., to a consumer. So it is to be understood that the invention can be applied in payment systems for other services as well.

### Description of the prior art

Numerous payment systems, which use memory cards or smart cards for example, are known whereby the consumer pays in advance for a service or makes periodic payments against an allowed credit limit for example.

A payment system is known (EP 0 784 300 A2), in which a customer's smart card contains a storage medium for accounts of service providers.

A further payment system with a few purses is known (WO 96/36025), in which a class hierarchy is defined which prevents the system from executing not allowed transactions between purses.

It is generally known, that several standards or suggestions for standards exist in the area of Smart Carts and Smart Card payment section: ISO/IEC 7816, ISO 10536, Java™ Card, EMV '96 (Europay-MasterCard-VISA), VISA Cash or Mondex for instance. Consequently several different payment schemes exist or will be developed in the future.

An object of the invention is to provide a payment system which is capable to handle and manage various payment schemes automatically.

A further object of the invention is to create a payment system which provides an economical upgrade path for an accessory delivering apparatus.

### Summary of the invention

According to one aspect of the present invention there is provided a payment system for delivering a service issued to a consumer. The system comprising a delivering apparatus which is selectively operable to deliver the service to the consumer and payment means for controlling supply of the service by the delivering apparatus. The payment means comprising a portable data storage device wherein the portable data storage device includes a first storage area which represents a monetary value and which is assigned to the customer, and wherein the portable data storage device also includes a second storage area which represents a further monetary value and which is assigned to a service provider. The portable data storage device further includes a script module containing information relating the access procedures and use of the storage areas.

Another aspect of the invention provides a payment system for delivering a service issued to a consumer. The system comprising a delivering apparatus which is selectively operable to deliver the service to the consumer and payment means for controlling supply of the service by the delivering apparatus. The payment means comprising a portable data storage device wherein the portable data storage device includes a first storage area which represents a monetary value and which is assigned to the customer, and wherein the portable data storage device also includes a second storage area which represents a further monetary value and which is assigned to a service provider. The portable data storage device further includes a script module containing information and/or commands to provide additional functionality to the delivering apparatus or to the payment means.

### Advantageous developments of the invention

To build up a bidirectional data flow between the payment means and the delivering apparatus the payment means are linkable to the delivering apparatus by interface means, wherein the portable data storage device may be contactlessly coupled to the system.

To guarantee a payment the service is dependent by a data transfer between the first data storage area and the second data storage area, wherein in a prefered solution the first and the second storage area of the portable data storage device is functionable as an electronic purse. In a prefered solution the first storage area contains a prepaid value or a credit.

In a prefered solution the script module comprises information which is capable of enabling data transfer actions between the first storage area and the second storage area and/or the portable data storage device includes a script module comprising commands which are qualified to carry out monetary transactions between the first and the second storage area of the portable data storage device. Depending on the requirements said information or said commands may be accessible in the payment means or in the delivering apparatus. For that purpose the delivering apparatus includes means for interpretation of information of the script module and/or means to interpret and/or execute a command from the script module. If required the payment means include means for interpretation of information of the script module and/or means to interpret and/or execute a command of the script module. Means to interpret and/or execute a command from the script module also may be arranged in the portable data storage device.

Not at least to provide an upgrade functionality the script module in the portable data storage device or in the payment means respectively is remotely loadable partially at least.

In a prefered variant the script module in the portable data storage device is loadable partially at least by the delivering apparatus.

To increase the comfort a purse may be remotely accessible by a point of sale for inspection or for execution of data transactions.

To get a simpler delivering apparatus the script module from the payment means may also contain commands which are qualified to serve the delivering apparatus. Therefore the script module in the payment means may contain commands to carry out tariff calculations for example or it may comprise commands which are qualified to transfer data between the delivering apparatus and the portable data storage device.

In a further prefered solution the delivering apparatus has a data storage device in which at minimum parts of the script module from the payment means are loadable, with it the delivering apparatus also is able to work after the portable data storage device is disconnected from the delivering apparatus. Moreover the delivering apparatus may be upgraded through the payment means.

To ensure security the information of the script module may be protected by cryptographic means when the information is transmitted to the payment means or when it is transmitted to the delivering apparatus.

In a advantageous implementation of the delivering apparatus the delivered service is based on values which are measured by the delivering apparatus or the delivered service is based on the passage of time. Moreover the delivering apparatus may be operable to measure the consumed service and selectively to cut-off the supply of the service to the consumer.

The delivering apparatus may comprise a utility meter for instance an electricity meter or a gas meter or a water meter or a combination of two ore more service meters.

To provide a time dependent system the script module may comprise commands which interpretation is dependant from time.

### Brief description of the drawings

The above objects and other objects, features and advantages of the invention will be apparent from the following detailed description of illustrative embodiments which is to be read in connection with the accompanying drawing, in which:
- Fig. 1: shows a block diagram of a payment system according to the invention,
- Fig. 2: shows a data flow chart to said payment system,
- Fig. 3: shows a data flow chart of a prefered implementation of said payment system, and
- Fig. 4: shows a data flow chart of a further prefered implementation.

### Description of the preferred embodiments

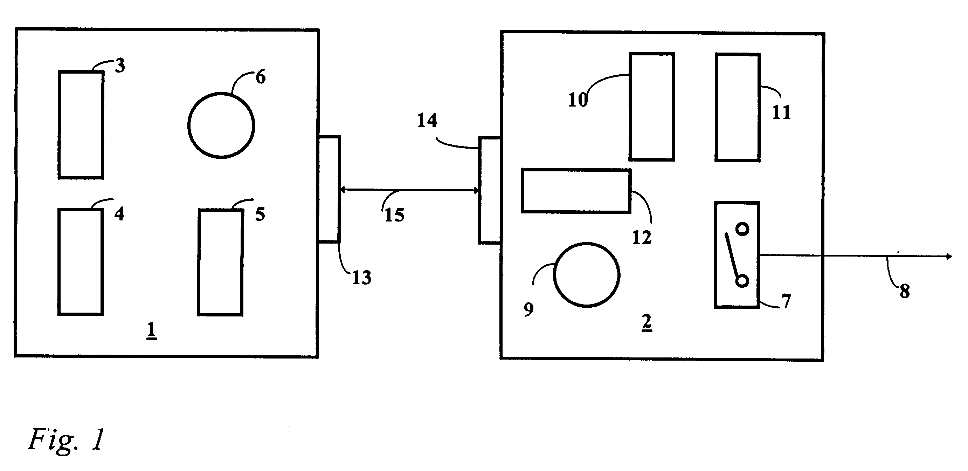

Fig. 1 shows a payment system comprising payment means 1 and a delivering apparatus 2. A prefered implementation of the payment means 1 comprises a portable data storage or a memory card or a chip card or a so called smart card respectively.

The payment means 1 at least have a first storage area 3 and a second storage area 4. The first storage area 3 represents a monetary value which is assigned to a consumer, whereas the second storage area 4 represents a monetary value which is assigned to a service provider, a utility company for example. If required the payment means 1 comprises further storage areas, which could be assigned to further service providers. The payment means further includes a script module 5 containing information and/or commands relating the access procedures and use of the storage areas 3 and 4. The information and/or commands can be used in conjunction with the payment means 1 to permit the payment means to allow the service provider to accept payment for the service using a plurality of payment schemes. If required the payment means 1 comprises a microprocessor or a microcomputer 6.

In a prefered variant of the invention the script module 5 containing information and/or commands which can be used in conjunction with the payment means to provide additional functionality, which was not present in the payment means at the time of installation of the payment means.

A prefered implementation of the delivering apparatus 2 comprises cut-off means for a service 8, further microprocessor or microcomputer 9, a further script module 10, metering means 11 and a data module 12.

A first interface part 13 and a second interface part 14 allow the connection of the payment means 1 to the delivering apparatus 2 and to build up a bidirectional data flow 15 between the payment means 1 and the delivering apparatus 2.

A prefered implementation of the first interface part 13 and a second interface part 14 is a known chip card reader/writer.

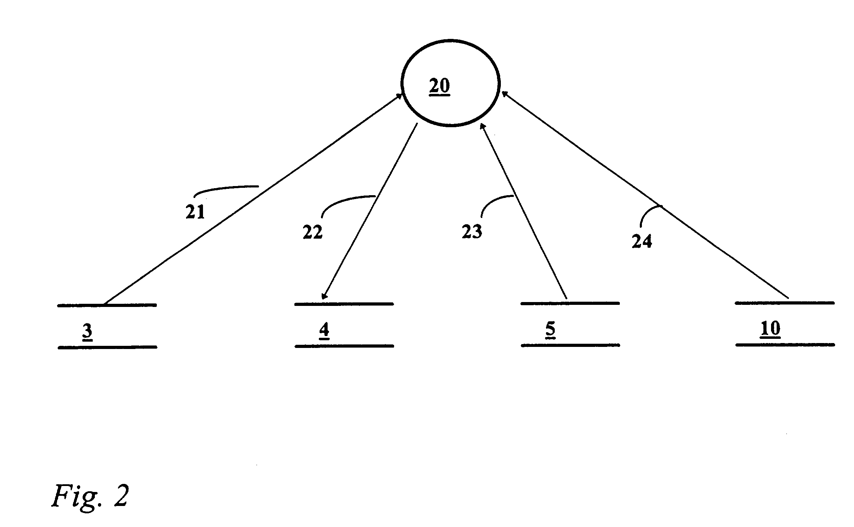

In the mode of representation for data flow charts, which is selected for the drawing in Fig. 2, Fig. 3 and Fig. 4 and which is known from the literature (see in that respect for example D. J. Hatley, I.A. Pirbhai: Strategies for Real-Time System Specification, Dorset House, NY 1988), a circle denotes an activity, a square denotes an adjoining system and an arrow denotes a channel for the transmission of data and/or events, the points of the arrows pointing in the substantial data flow direction. A data memory which is generally available for a plurality of activities is represented by two equal-length parallel lines. Here the term data memory denotes a device for the storage of data, which also has means for preventing conflicts in the event of access which is parallel in respect of time of a plurality of activities to the data. Subsequently for example an arrangement comprising two activities connected by a channel, is equivalent to a single activity which performs all functions of said two activities. An activity can generally be broken down into a plurality of activities which are connected by way of channels and/or data memories. Further designations used in the data flow chart literature are "terminator" for the adjoining system, "process" or "task" for the activity, "data flow" or "channel" for the channel and "pool" or "data pool" for the data memory.

An activity can be embodied as an electronic circuit or also in software terms as a process, a portion of a program or a routine, while the activity also includes the target hardware in the case of a software configuration.

In the data flow chart according to Fig. 2 reference numeral 20 denotes an activity which is connected to the first storage area 3, the second storage area 4, the script module 5 and the further script module 10 by a first, a second, a third and a fourth data flow 21, 22, 23 and 24.

The first storage area 3, the second storage area 4 and the script module 5 are implementable as subdirectories on a smart card or on a memory card.

A transaction from the first storage area 3 to the second storage area 4 by means of the first data flow 21 and the second data flow 22 is executable by the activity 20, in which the current payment scheme is available by the script module 5 or if required in a variant by the script module 5 and the script module 10.

The data flow 21, 22 from the first storage area 3 to the second storage area 4 - or from the customer's purse to the provider's purse respectively - is in one direction, this is to prevent theft from the second storage area 4 - or from the provider's purse respectively. A monetary value from the second storage area 4 - or from the provider's purse respectively - is moved to its bank account using different access conditions.

In a prefered payment system the activity 20 is implemented by means of the microprocessor or microcomputer 6 and/or the microprocessor or microcomputer 9.

The script module 5 and the further script module 10 are preferably written in a known formal language, in Java™ or Java™ Script for example. Different languages could be used in the script module 5 and the further script module 10, for example a Java™ applet on the payment means and Basic or Pascal on the card. In a variant of the invention the script module 5 or 10 can be written in native microprocessor code or in a proprietary code.

The script module 5 or the script modules 5 and 10 contains the knowledge as to what access commands or methods must be used to access the first and second storage areas 3 and 4 to make a transaction. Hence how to enable the delivering apparatus 2 to use any payment scheme which a provider company has a licence to use without having replace the delivering apparatus 2 or have a service engineer visiting the delivering apparatus 2 to reprogram them.

The script module 5 in the payment means may contain information and/or commands to extend generally the functionality of the delivering apparatus 2 or to extend the functionality of the metering means 11. In this way extended funcionality brings the advantage of an easy and cheap upgrade feature for the delivering apparatus 2 or the metering means 11 respectively, because the functionality of the delivering apparatus 2 or the metering means 11 is shifted to the portable data storage device. Instead of having a service engineer visiting the delivering apparatus to reprogram them, the reprogramming is executable by the upgraded removable data storage device or the payment means 1 respectively.

In a prefered implementation data from the script module 5 is loadable to the delivering apparatus 2 for execution and/or interpretation.

In a further prefered implementation a generic set of command labels are held in the script module 10 of the delivering apparatus. Said command labels are used to invoke commands from the script module 5 in the payment means 1. Self-explaining generic command labels could be TRANSFER_ONE_UNIT_FROM_TO(customer_purse, provider_purse) or EXECUTE_NEXT_INSTRUCTION.

To accept any different payment scheme brings the advantage not to need two smart cards connected to the delivering apparatus 2 at the same time to make a transfer, and therefore to save on the cost of a second card reader, and the cost of collecting and transferring the data from the second smart card.

Once a transfer from the first storage area 3 to the second storage 4 is successfully completed the payment means 1 by means of the script module 5 sends a signal which is favourably cryptographically protected, so that the delivering apparatus 2 will know that a unique transfer of a monetary value has occurred from the customer's purse to the provider's purse and it's allowed to release the service; gas, water or electricity for example.

In a prefered variant of the payment system the delivering apparatus 2 could store a temporary copy of the script module 5 or of parts of the script module 5 from the payment means 1 so that the script is executable while the payment means 1 are disconnected from the delivering means 2.

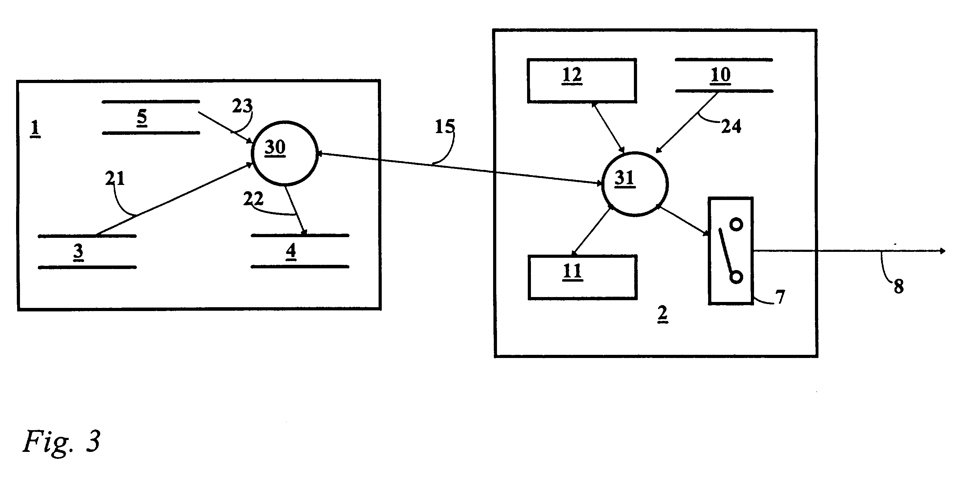

In Fig. 3 the payment means 1 are implemented by means of a smart card having an own microprocessor. An application 30 is remotely loadable to the payment means 1 as a value added service. Generic commands of the application 30 are transferable by means of the script module 5 into information needed by the payment means 1 to manage the current payment scheme for transactions between the two storage areas 3 and 4.

In a prefered variant the payment means do not transfer a monetary amount to the delivering means, instead the application 30 would convert the monetary amount into a physical limit up to which the consumer could use the provided service 8. On reaching this limit the cut-off means 7 shuts off the supply.

In a further prefered variant the script module 5 contains additional features and functions relating to the delivering apparatus generally or to the metering means 11 specifically. In this way most of the functionality or intelligence of the delivering apparatus 2 may be shifted from the delivering apparatus 2 to the payment means to reduce the complexity of the delivering apparatus 2 or the metering means 11 and to provide a economical upgrade path so that the delivering apparatus 2 or the metering means 11 respectively are effectively future proofed. A delivering application 31 just asks via the data flow 15 for a next instruction. If required the further script module 10 in the delivering apparatus 2 contains information for execution of the instruction. By means of the script module 5 in the payment means 1 the following types of functions could be performed:
- Data transfer from the data module 12 to the payment means,
- complex tariff calculations,
- writing message strings to a display of the delivering apparatus 2, while the message strings are stored in the script module 5,
- and so on.

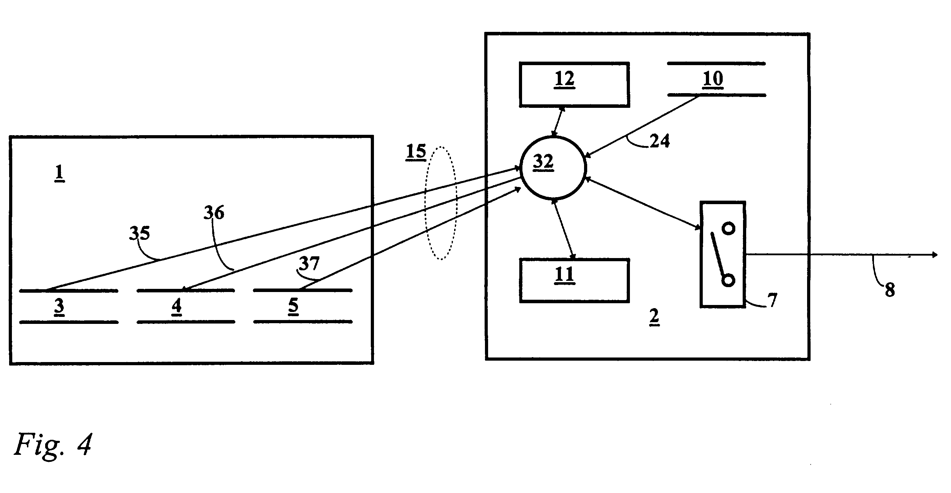

In Fig. 4 the payment means 1 are implemented by means of a memory card having no own microprocessor. Generic commands of a further delivering application 32 are transferable by means of the script module 5 into information needed by the payment means 1 to manage the current payment scheme for transactions between the two storage areas 3 and 4. The data flow 15 can comprise a fifth data flow 35 between the application 32 and the first storage area 3, a sixth data flow 36 between the application 32 and the second storage area 4 and a seventh data flow 37 between the application 32 and the script module. In a variant the two storage areas 3 and 4 are accessible by links or pointers from the script module 5, with said links or pointers the data flows 35 and 37 between the third activity 32 and two storage areas 3 and 4 may be omitted.

The script module 5 can contain additional features and functions relating to the delivering apparatus 2 generally or to the metering means 11 specifically. In this way most of the functionality or intelligence of the delivering apparatus 2 may be shifted from the delivering apparatus 2 to the payment means to reduce the complexity of the delivering apparatus 2 or the metering means 11 and to provide a economical upgrade path so that the delivering apparatus 2 or the metering means 11 respectively are effectively future proofed. The delivering application 32 just asks via the data flow 15 for a next instruction. If required the further script module 10 in the delivering apparatus 2 contains information for execution of the instruction.

## Claims

1. A payment system for delivering a service (8) issued to a consumer, the system comprising:
a delivering apparatus (2) which is selectively operable to deliver the service (8) to the consumer; and
payment means (1) for controlling supply of the service (8) by the delivering apparatus (8);
wherein the payment means comprising a portable data storage device, and
wherein the portable data storage device includes a first storage area (3) which represents a monetary value and which is assigned to the customer, and
wherein the portable data storage device also includes a second storage area (4) which represents a further monetary value and which is assigned to a service provider, and
wherein the portable data storage device further includes a script module (5) containing information relating the access procedures and use of the storage areas.

2. A payment system for delivering a service (8) issued to a consumer, the system comprising:
a delivering apparatus (2) which is selectively operable to deliver the service (8) to the consumer; and
payment means (1) for controlling supply of the service (8) by the delivering apparatus (8);
wherein the payment means (1) comprising a portable data storage device, and
wherein the portable data storage device includes a first storage area (3) which represents a monetary value and which is assigned to the customer, and
wherein the portable data storage device also includes a second storage area (4) which represents a further monetary value and which is assigned to a service provider, and
wherein the portable data storage device further includes a script module (5) containing information and/or commands to provide additional functionality to the delivering apparatus (2) or to the payment means (1).

3. A payment system as claimed in any preceding claim, wherein the payment means (1) are linkable to the delivering apparatus (2) by interface means (13, 14) to build up a bidirectional data flow (15) between the payment means (1) and the delivering apparatus (2).

4. A payment system as claimed in any preceding claim, wherein the service is dependent by a data transfer between the first data storage area (3) and the second data storage area (4).

5. A payment system as claimed in any preceding claim, wherein the first storage area (3) of the portable data storage device is functionable as an electronic purse.

6. A payment system as claimed in any preceding claim, wherein the second storage area (4) of the portable data storage device is functionable as a further electronic purse.

7. A payment system as claimed in any preceding claim, wherein the first storage area (3) contains a prepaid value.

8. A payment system as claimed in any preceding claim, wherein the script module (5) comprises information which is capable of enabling data transfer actions between the first storage area (3) and the second storage area (4).

9. A payment system as claimed in any preceding claim, wherein the portable data storage device includes a script module (5) comprising commands which are qualified to carry out monetary transactions between the first (3) and the second (4) storage area of the portable data storage device.

10. A payment system as claimed in any preceding claim, wherein the delivering apparatus (2) includes means (9, 11, 12) for interpretation of information of the script module (5).

11. A payment system as claimed in any preceding claim, wherein the payment means (1) include means (6) for interpretation of information of the script module (5).

12. A payment system as claimed in any preceding claim, wherein the payment means (1) further comprises means (6) to interpret and/or execute a command of the script module (5).

13. A payment system as claimed in any preceding claim, wherein the portable data storage device further comprises means (6) to interpret and/or execute a command from the script module (5).

14. A payment system as claimed in any preceding claim, wherein the delivering apparatus (2) further comprises means (10, 9) to interpret and/or execute a command from the script module (5).

15. A payment system as claimed in any preceding claim, wherein the script module (5) in the portable data storage device is remotely loadable, at least partially.

16. A payment system as claimed in any preceding claim, wherein the script module (5) in the portable data storage device is loadable by the delivering apparatus (2) at least partially.

17. A payment system as claimed in any preceding claim, wherein a purse (3; 4) is remotely accessible by a point of sale for inspection or for execution of data transactions.

18. A payment system as claimed in any preceding claim, wherein the script module (5) comprising commands which are qualified to carry out tariff calculations.

19. A payment system as claimed in any preceding claim, wherein the script module (5) comprising commands which are qualified to transfer data between the delivering apparatus (2) and the payment means (1) or the portable data storage device respectively.

20. A payment system as claimed in any preceding claim, wherein the delivering apparatus (2) has a data storage device (10; 12) in which parts of the script module from the payment means (1) are loadable.

21. A payment system as claimed in any preceding claim, wherein the information of the script module (5; 10) is protected by cryptographic means when the information is transmitted to the payment means (1) or when it is transmitted to the delivering apparatus (2).

22. A payment system as claimed in any preceding claim, wherein the delivered service (8) is based on values which are measured by the delivering apparatus (2).

23. A payment system as claimed in any preceding claim, wherein the delivered service (8) is based on the passage of time.

24. A payment system as claimed in any preceding claim, wherein the delivering apparatus (2) is operable to measure the consumed service (8) and selectively to cut-off the supply of the service (8) to the consumer.

25. A payment system as claimed in any preceding claim, wherein the delivering apparatus (2) comprises a utility meter (11) for instance an electricity meter or a gas meter or a water meter or a combination of two ore more service meters.

26. A payment system as claimed in any preceding claim, wherein the script module (10; 5) comprising commands which interpretation is dependent from time.

27. A payment system as claimed in any preceding claim, wherein the portable data storage device is contactlessly coupled to the delivering means (2).
